# EUROPÄISCHE PATENTSCHRIFT

(11) **EP 1 967 422 B1**
(45) Veröffentlichungstag und Bekanntmachung des Hinweises auf die Patenterteilung: **18.04.2012**
(21) Anmeldenummer: 07103806.1
(22) Anmeldetag: 08.03.2007
(51) Int. Cl.: B60R 21/235

(54) **Airbag**
Airbag
Airbag

(43) Veröffentlichungstag der Anmeldung: 10.09.2008
(73) Patentinhaber: nolax AG, 6203 Sempach Station (CH)
(72) Erfinder: Traber, Bruno, 3110 Münsingen (CH); Grimminger, Benjamin, 3012 Bern (CH); Meincke, Olaf, 3014 Bern (CH); Schulthess, Adrian, 1734 Tentlingen (CH); Studt, Hans-Joachim, 37181 Hardegsen/Lichtenborn (DE)
(74) Vertreter: Hepp Wenger Ryffel AG

(56) Entgegenhaltungen:
- DE-A1- 1 454 988
- DE-A1- 19 724 672
- JP-A- 3 007 337
- JP-A- 6 305 089
- US-A1- 2004 029 468
- US-B1- 6 220 629

## Beschreibung

Die Erfindung betrifft einen Luftsack (Airbag), ein Verfahren zur Herstellung eines solchen Luftsacks sowie einen Polymerfilm und ein Verbundschichtmaterial gemäss den unabhängigen Patentansprüchen.

Luftsäcke werden derzeit vor allem in Automobilen verwendet. Die Luftsäcke werden im Falle einer Kollision in Sekundenbruchteilen aufgeblasen und sollen ein Aufschlagen der Passagiere auf die Fahrzeugteile wie bspw. das Lenkrad, Armaturenbrett oder Seitenteile des Fahrzeugs verhindern. Um im Kollisionsfall eine ausreichende Standzeit des Luftsacks sicherstellen zu können, muss dieser ausreichend dicht sein. Zur Gewährleistung der Dichtheit gibt es verschiedenste Ansätze:

Im Stand der Technik sind so genannte One-piece-woven-Luftsäcke (OPWs) bekannt, welche in einem aufwändigen Webverfahren einstückig, also nahtfrei hergestellt werden können. OPWs sind jedoch in aller Regel nicht ausreichend dicht, so dass eine weitere Abdichtung vonnöten ist. Eine derartige weitere Abdichtung wird durch das Auflaminieren von dünnen Folien erreicht, welche die Dichtheit des Luftsacks gewährleisten sollen; ein derartiges Verfahren ist bspw. beschrieben in DE 102 24 771 A1. Dies verteuert jedoch die ohnehin sehr kostenintensive Herstellung der OPWs zusätzlich. Zudem ist das Aufbringen der Folie auf die Aussenseite des OPWs nachteilig, da durch den Durchtritt des Gases durch das Gewebe des OPWs die Laminierung der aussen liegenden Folie beeinträchtigt werden kann, was im ungünstigsten Fall zum Aufblähen der Folie und schlimmstenfalls zum Reissen der Folienhülle führen könnte.

Ebenfalls bekannt sind genähte Luftsäcke. In den Nahtbereichen ist bei solchen Luftsäcken zwingend eine zusätzliche Abdichtung nötig. Ein derartiger Luftsack ist aus der DE 19 724 672 bekannt. Dies kann bspw. durch Silikonbeschichtungen erfolgen; derartige Beschichtungen neigen jedoch im gefalteten Zustand des Luftsacks zum Verkleben mit der Gegenseite. Die zuverlässige Folienbeschichtung eines fertig genähten Luftsacks ist jedoch im Nahtbereich aufgrund der stellenweisen Erhöhungen durch die Naht selbst erschwert: Im Nahtbereich kann ein Aufbrechen der Laminierung im aufgeblasenen Zustand des Luftsacks ein Risiko darstellen. Die Folienbeschichtung des Luftsack-Gewebes vor dem Vernähen löst dieses Problem nicht: Die Folie würde beim Vernähen durchstochen, was zur Undichtigkeit führt.

Es ist daher eine Aufgabe der Erfindung, die Nachteile des Bekannten zu vermeiden, insbesondere einen kostengünstig herstellbaren sowie einfach und zuverlässig abgedichteten Luftsack bereitzustellen.

Diese Aufgabe wird gelöst durch die Gegenstände der unabhängigen Patentansprüche.

Ein Luftsack gemäss der Erfindung umfasst wenigstens ein Wandungsteil, insbesondere zwei Wandungsteile. Der Luftsack kann aus einem einzigen Wandungsteil hergestellt werden, wenn dieses über einen geeigneten Zuschnitt verfügt; dann kann dieses Wandungsteil über einen Randbereich umgeklappt werden und in den verbleibenden Randbereichen verbunden werden. Selbstverständlich ist aber auch die Herstellung aus zwei (oder mehr) ursprünglich separaten Wandungsteilen möglich. Das bzw. die Wandungsteile umfassen oder bestehen aus einem Verbundschichtmaterial, wobei das Verbundschichtmaterial umfasst:
- eine Trägerschicht, insbesondere bestehend aus einem gasdurchlässigen textilen Flächengebilde, vorzugsweise einer Gewebe- oder Gewirkelage,
- einen wenigstens zweischichtigen, insbesondere co-extrudierten Polymerfilm, wobei eine erste, der Trägerschicht zugewandte Polymerschicht eine Glasübergangstemperatur Tg₁ von ≤ 10°C, bevorzugt ≤ 0°C, besonders bevorzugt ≤ -20°C aufweist und eine zweite, von der Trägerschicht abgewandte Polymerschicht einen Speichermodul gemäss dem Torsionsschwingungsversuch nach DIN 53445 (August 1986) von ≥ 1 MPa bei ≥ 90°C, bevorzugt ≥ 110°C und besonders bevorzugt ≥ 120°C aufweist. Die Glasübergangstemperatur T_{g2} der zweiten Polymerschicht ist hierbei vorzugsweise > T_{g1}.

Unter dem "Tg einer Polymerschicht" wird hier und im folgenden jeweils der T_{g} verstanden, welcher das Verhalten der Schicht massgeblich bestimmt.

Der Torsionsschwingungsversuch nach DIN 53 445 wird mit folgenden Massgaben durchgeführt. Probengeometrie: Flachstab, Breite 10 mm, Länge 50 mm, Dicke 1 mm. Der Probenkörper wird mit einer beheizten Stempelpresse und einer geeigneten Form hergestellt. Zur Konditionierung wird der Probenkörper bei 40 °C in einem Vakuumtrockenschrank über 24 h gelagert. Anfangstemperatur: 23°C; Temperaturheizrate von 2 °C / min.

Das bzw. die Wandungsteile sind in wenigstens einem Verbindungsbereich, insbesondere nur in Randbereichen des Luftsacks zusammengefügt. Die Zusammenfügung ist hierbei derart ausgestaltet, dass die zweiten Polymerschichten des bzw. der Wandungsteile(s) entweder direkt miteinander verbunden sind oder über einen Zwischenabschnitt indirekt miteinander verbunden sind. Die erste Polymerschicht dient typischerweise zur Laminierung des Polymerfilms auf die Trägerschicht. Bei geeigneter Ausgestaltung einer Polymerschicht und insbesondere geeigneter Auftragsdicke kann bei einem Wandungsteil, insbesondere bei beiden Wandungsteilen auch lediglich eine einzige Polymerschicht mit den Eigenschaften sowohl der ersten als auch der zweiten Polymerschicht vorgesehen sein, soweit die vorgenannten Anforderungen an die Dichtigkeit (Standzeit) und die Festigkeit der Klebeverbindung erfüllt werden.

Es wurde überraschend gefunden, dass durch die gezielte Ausgestaltung des Polymerfilms dieser Film sowohl für die Abdichtung des Luftsacks als auch zur Verbindung von Teilbereichen genutzt werden kann; auf zusätzliche mechanische Verbindungsmittel wie bspw. Nähte kann vollständig verzichtet werden. Durch diese Multifunktionalität der Folie ist offensichtlich sowohl die Herstellung des Airbags vereinfacht als auch die Abdichtung zuverlässiger: Es müssen keine Folien mehr über bestehende Nähte laminiert werden, was zu Undichtigkeiten führen kann, sondern es wird die Folie selbst als Verbindungsmittel genützt, bspw. durch gezieltes Aufschmelzen und Wiedererkalten der aufeinander liegenden Polymerschichten. Selbstverständlich ist nicht nur der Einsatz rein physikalisch aufschmelzender und wiedererstarrender Polymerschichten möglich, sondern bspw. auch der Einsatz reaktiver Polymerschichten, die bspw. unter einem bestimmten Energieeintrag chemisch nachvernetzen. Diese Nachvernetzung kann bspw. durch UV-Strahlung, Elektronenstrahlung oder thermisch erfolgen. Vorzugsweise können auch latent reaktive Systeme zum Einsatz kommen. Derartige Polymersysteme sind dem Fachmann an sich bekannt (bspw. aus EP 1 469 036 B1) und können im Rahmen der Erfindung verwendet werden, soweit die Verarbeitbarkeit in Form von Folien gegeben ist. Hinsichtlich chemisch nachvernetzender Polymersysteme wird verwiesen auf Radiation Curing in Polymer Science and Technology Vol 1-4, Ed. J.P. Science and Technology Vol 1-4, Ed. J.P. Fouassier & J.F. Rabek, Elsevier Applied Science, 1993; die Offenbarung dieser Publikation wird betreffend nachvernetzbarer Systeme in die vorliegende Beschreibung durch Bezugnahme eingeschlossen.

In besonders bevorzugten Ausführungsformen des Luftsacks ist das bzw. die Wandungsteil(e) des Luftsacks derart angeordnet, dass sich im Betriebszustand des Luftsacks das textile Flächengebilde des Verbundschichtmaterials auf der Aussenseite befindet. Hierdurch kann das vorstehend beschriebene Risiko des Aufreissens der Laminierung von Folie und Trägerschicht bei aussen angeordneter Folie verhindert werden; bei innen angeordneter Folie wird allenfalls die Folie von dem eintretenden Gas gegen das Gewebe gepresst, eine Delamination ist hingegen nicht möglich.

Besoders vorteilhaft ist die Glasübergangstemperatur T_{g1} ≤ -30°C) und/oder die Glasübergangstemperatur T_{g2} der zweiten Polymerschicht ≤ 20°C (vorzugsweise ≤ 0°C).

Das Material der ersten Polymerschicht, die auch die Klebeschicht des Polymerfilms zur Trägerschicht darstellt, soll eine möglichst tiefe Glasübergangstemperatur T_{g1} aufweisen, da die Schicht möglichst weich und flexibel sein muss; insbesondere muss sie noch bei -30°C ausreichend flexibel sein. Durch diese Flexibilität wird sichergestellt, dass die Klebeschicht auch bei niedrigen Temperaturen eine ausreichende Verbindung des Polymerfilms mit dem Gewebe gewährleisten kann. Die erste Polymerschicht weist auch einen niedrigeren Schmelzbereich als das Material der zweiten Schicht auf, welche a) als Deckschicht des Polymerfilms und b) als Klebeschicht des Polymerfilms mit einem anderen (Teil des) Wandungsteil(s) dient. Dieses Material muss eine Reihe von Anforderungen erfüllen: Das Material muss eine hohe Schmelztemperatur aufweisen; ein unkontrolliertes Verkleben der zweiten Polymerschicht mit einer anderen, darauf liegenden zweiten Polymerschicht muss auch bei einer Lagerung bei einer Temperatur von über 90°C, vorzugsweise auch bei einer Temperatur von über 120°C weitestgehend ausgeschlossen sei. Sodann ist eine ausreichende Flexibilität des Materials der zweiten Polymerschicht auch bei einer Temperatur von -30°C notwendig. (Die Temperatur von -30°C stellt eine Standardtemperatur für die Prüfung der Standfestigkeit eines Luftsackmaterials bei niedrigen Temperaturen dar). Bei einer solchen tiefen Temperatur muss die zweite Polymerschicht intakt bleiben, um die Dichtheit des Polymerfilms beim Entfalten des Luftsacks aufrechterhalten zu können.

Bevorzugt besteht die erste Polymerschicht aus niedrig schmelzenden, weichen Polymeren mit einem T_{g1} von, speziell bevorzugt, < -20°C und vermag eine gute Verbindung zum verwendeten Material der Trägerschicht einzugehen. Materialien können bevorzugt auch sein Polyurethane mit einem Schmelzbereich von 90 bis 160°C und einer Shore-A-Härte kleiner 95 (entsprechende Produkte stellen z.B. die Firmen Huntsman, Huntsman Polyurethanes, 2190 Executive Hills Boulevard, Auburn Hills, MI 48326, USA; Bayer Materialscience, D-51368 Leverkusen, Deutschland oder Merquinsa, Gran Vial 17, 08160 Montmeló, Barcelona, Spanien her). Als weitere Materialien können eingesetzt werden: Polyethylen, Copolymere von Ethylen und höheren 1-Olefinen (LLDPE, VLDPE, etc.) sowie bevorzugt auch funktionelle Copolymere auf Polyolefinbasis. Entsprechende Produkte stellen die Firmen Exxon, Basell, Total Petrochemicals, DOW oder Arkema her. Die vorstehend beschriebenen Materialien können (alleine oder in Kombination oder Mischung mit anderen Kunststoffen) verwendet werden.

Das oben erwähnte unkontrollierte Verkleben der zweiten Polymerschicht darf beim zusammengefalteten, eingebauten Luftsack nicht auftreten. Bevorzugt umfasst das Material der zweiten Polymerschicht einen Copolyester, ein Copolyamid oder ein Polyamidelastomer. Das Material weist dabei einen Speichermodul gemäss dem Torsionsschwingungsversuch nach DIN 53445 von ≥ 1 MPa bei ≥ 90°C, bevorzugt ≥ 110°C und besonders bevorzugt ≥ 120°C aufweist. Derartige Materialien können die gestellten Anforderungen erfüllen, d.h. sie besitzen einen tiefen Gleit-Reibwert, eine gute Kälteschlagzähigkeit, eine gute Scheuerbeständigkeit, sind sehr flexibel und weich. Weiter bevorzugt sind polymere Materialien aus der Gruppe der thermoplastischen Elastomere, da sie eine hohe Flexibilität, Weichheit und Tieftemperatur-Zähigkeit aufweisen. Im Speziellen weisen Polyamidelastomere ein günstiges Eigenschaftsprofil auf, sie werden unter anderen von der Fa. Degussa (Vestamid E-Serie) oder der Fa. Arkema (PEBAX-Serie) vertrieben. Die vorstehend beschriebenen Materialien können (alleine oder in Kombination oder Mischung mit anderen Kunststoffen) verwendet werden.

Es sind auch zusätzliche Schichten im Verbundaufbau denkbar. Zusätzliche Schichten können in einem erfindungsgemässen Verbund entsprechend spezifischen Aufgaben vom Fachmann routinemässig ausgewählt werden, wie z.B. das Sicherstellen einer ausreichenden Schichtenhaftung, Verbesserung von mechanischen Eigenschaften, wie z.B. die Zähigkeit oder Durchstossfestigkeit, oder auch die thermische Stabilität im Falle hochschmelzender (T_{e3 der zusätzlichen Schicht} > Tₑ₂) Schichten. Besonders vorteilhaft kann eine zusätzliche, hochschmelzende Schicht zwischen der ersten und der zweiten Polymerschicht eingefügt werden, bspw. mit einem Schmelzpunkt von > 180°C. Der hohe Schmelzpunkt einer solchen Zwischenschicht kann wirkungsvoll verhindern, dass der Polymerverbund beim thermischen Aufschmelzen (bzw. Erweichen) der zweiten Polymerschicht, bei welchem auch die erste Polymerschicht aufgrund ihrer niedrigeren Erweichungstemperatur (wieder)erweicht, tiefer in das Trägermaterial eindringt als gewünscht und so die Haftung in dem Trägermaterial, insbesondere einem Gewebe, beeinträchtigt werden könnte. Dies kann wirkungsvoll durch die hochschmelzende Zwischenschicht vermieden werden.

Der Copolyester, das Copolyamid oder das Polyamidelastomer können gegebenenfalls Additive wie Antioxidantien, Gleitmittel (z.B. Fettsäureamide) oder Antiblockmittel (z.B. Silica) enthalten, die die Eigenschaften dieser Materialien, wie beispielsweise Stabilität oder Verarbeitbarkeit verbessern.

In einer weiteren, vorteilhaften Ausführungsform des Verbundschichtmaterials enthält das Material der ersten und/oder der zweiten Polymerschicht mindestens ein Flammschutzmittel. Diese Flammschutzmittel können auf halogenhaltigen oder halogenfreien Komponenten basieren. Die halogenhaltigen Flammschutzmittel-Zusammensetzungen enthalten z.B. Deca-brom-cyclohexan, Deca-brom-diphenylen etc. und/oder Antimon(III)-oxid (Sb₂O₃) in einem Trägerpolymer, welches meist LDPE ist. Es können auch halogenfreie Flammschutzmittel eingesetzt werden, z.B. Phosphatester, Aluminiumoxid-trihydrat, Magnesiumoxid-dihydrat, roter Phosphor, Zinkborat, Ammoniumpolyphosphat, Melamincyanurat, Zinkstannat oder Zinkhydroxidstannat. Der Zusatz eines Flammschutzmittels erhöht die Stabilität des Polymerfilms des Airbag-Verbundschichtmaterials gegenüber der thermischen Belastung durch die heissen Verbrennungsgase, die bei der Auslösung des Airbags freigesetzt werden. Ein Durchschmelzen bzw. ein Entflammen des Polymerfilms und damit eine Fehlfunktion des Airbags wird damit vermieden.

Vorstellbar ist auch eine Einfärbung zumindest einer der Schichten des Polymerfilms.

Vorteilhaft weist das Verbundschichtmaterial, insbesondere für einen Airbag, eine Trägerschicht auf, die aus Polyamid- oder Polyesterfilamenten oder -garn hergestellt, z.B. gewebt sein kann. Die Trägerschicht kann auch vliesartig oder gestrickt oder gewirkt oder als Netz (Gitter) ausgebildet sein. Trägermaterial und Polymerfilm müssen verbunden sein/werden. Dies lässt sich vor allem durch Verkleben oder vorzugsweise einen Laminiervorgang erreichen. Dabei kann z.B. die erste Polymerschicht oder das Trägermaterial auf eine Temperatur oberhalb der Erweichungstemperatur der ersten Polymerschicht erhitzt werden und sodann Trägerschicht und Polymerfilm durch Pressen oder auf einer Laminieranlage verbunden werden. Die Trägerschicht kann auch vorbehandelt oder vorbeschichtet sein.

In besonders bevorzugten Ausführungsformen des Luftsacks ist der wenigstens zweischichtige Polymerfilm auf die Trägerschicht laminiert, insbesondere mittels der ersten Polymerschicht und durch einen ersten Energieeintrag E₁; und/oder die Verbindung der zweiten Polymerschichten verschiedener Wandungsteile ist durch einen zweiten Energieeintrag E₂ bewirkt. Besonders vorteilhaft sind die Trägerschichten und Polymerschichten derart beschaffen, dass durch den Energieeintrag E₁ die erste(n) Polymerschicht(en), jedoch im Wesentlichen nicht die zweite(n) Polymerschicht(en) aufschmelzbar ist/sind, und dass durch den Energieeintrag E₂ die zweite(n) Polymerschicht(en), jedoch im Wesentlichen nicht die erste(n) Polymerschicht(en) aufschmelzbar ist/sind. Durch eine derart orthogonale Sensitivität der Polymerschichten für die verschiedenen Energieeinträge E₁ und E₂ können die beiden Polymerschichten bei der Herstellung des Verbundschichtmaterials und des Luftsacks selektiv angesprochen werden. Hierdurch kann insbesondere der Nachteil einer blossen thermischen Aufschmelzbarkeit beider Polymerschichten vermieden werden: Bei der Aufschmelzung der bei höherer Temperatur fliessfähigen Polymerschicht (bspw. der zweiten Polymerschicht) würde stets auch die bei niedrigerer Temperatur (wieder)aufschmelzende Polymerschicht (bspw. die erste Polymerschicht) aufgeschmolzen, was unerwünscht ist, da dies bspw. die Laminierung der Trägerschicht mit der ersten Polymerschicht beeinträchtigen könnte. Typischerweise weist die erste, der Trägerschicht zugewandte Polymerschicht eine Schmelztemperatur Tₛ₁ auf und die zweite, von der Trägerschicht abgewandte Polymerschicht weist eine Schmelztemperatur Tₛ₂ ≠ Tₛ₁ auf, wobei insbesondere Tₛ₂ > Tₛ₁ ist. Die orthogonale Sensitivität kann durch fachmännische Auswahl von Additiven wie bspw. IR-Absorber (z.B. Russ) oder HF-aktive Substanzen (z.B. Aluminium-Pulver) eingestellt und erhöht werden. Die folgenden Publikationen, deren Offenbarungen diesbezüglich in die vorliegende Beschreibung durch Bezugnahme eingeschlossen werden, beschreiben die Hochfrequenzverschweissung, welche als ein möglicher Energieeintrag im Rahmen der vorliegenden Erfindung verwendet werden kann: Saechtling Kunststoff-Taschenbuch, 29. Ausgabe, Hanser Verlag 2004, Seiten 339-340: Hochfrequenzschweissen (Polymere mit einem Verlustfaktor tan d > 0.1 können mit Hochfrequenz geschweisst werden, bspw.: PVC, PUR, PVDC, EVA, PET, ABS); Schwarz, Ebeling, Furth: Kunststoff-Verarbeitung, Vogel Buchverlag 1999, Seiten 213-215 (je höher der dielektrische Verlustfaktor tan d ist, desto polarer ist der Kunststoff und desto besser lässt er sich im Kondensatorfeld erwärmen und unter Druck verschweissen).

In weiteren vorteilhaften Ausführungsformen können die zweiten Polymerschichten der Wandungsteile über einen Zwischenabschnitt indirekt miteinander verbunden werden/sein. Hierbei weist der Zwischenabschnitt auf seinen den zweiten Polymerschichten zugewandten Seiten zumindest teilweise ein Material auf, welches identisch oder chemisch kompatibel mit dem Material der zweiten Polymerschicht(en) ist. Unter "chemisch kompatibel" wird hierbei verstanden, dass das Material durch einen Energieeintrag aufgeschmolzen werden kann und dadurch eine Verbindung (Verklebung) mit der zweiten Polymerschicht eingeht, welche im Wesentlichen die gleiche Festigkeit aufweist wie die zweiten Polymerschichten untereinander; das zusätzliche Einbinden eines Zwischenabschnitts soll also mit anderen Worten nicht zu einer Schwächung des Verbunds führen. Insbesondere kann der Zwischenabschnitt einen inneren Abschnitt umfassen, welcher aus einem Material bestehen kann, das auch als Trägerschicht des Wandungsteils geeignet ist (s. o.); besonders bevorzugt wird für Trägerschicht und den Zwischenabschnitt das gleiche Material verwendet. Durch einen Zwischenabschnitt kann dem Verbindungsbereich ggf. zusätzliche Stabilität oder auch bei entsprechender Materialauswahl, falls gewünscht, zusätzliche Elastizität verliehen werden.

Selbstverständlich kann das/die Wandungsteil(e) in Verbindungsbereichen zusätzlich durch mechanische Mittel verbunden sein, insbesondere durch Nähte. Bei zusätzlichen Nähten ist darauf zu achten, dass hierdurch die Dichtigkeit des Verbindungsbereichs nicht beeinträchtig wird; dies wird besonders einfach dadurch gewährleistet, dass der Verbindungsbereich, in welchem die zweiten Polymerschichten miteinander verbunden sind, ausreichend breit dimensioniert wird, so dass ohne weiteres noch eine zusätzliche Vernähung innerhalb des Verbindungsbereichs angebracht werden kann.

Ein weiterer Aspekt der Erfindung betrifft also ein Verfahren zur Herstellung eines vorstehend beschriebenen Luftsacks. Das Verfahren umfasst die Schritte:
a1) Herstellung eines Verbundschichtmaterials umfassend
   - eine Trägerschicht, insbesondere bestehend aus einem insbesondere gasdurchlässigen textilen Flächengebilde, vorzugsweise einer Gewebe- oder Gewirkelage; und
   - einen wenigstens zweischichtigen, insbesondere co-extrudierten Polymerfilm, wobei eine erste, der Trägerschicht zuzuwendende Polymerschicht eine Glasübergangstemperatur T_{g1} von ≤ 10°C, bevorzugt ≤ 0°C, besonders bevorzugt ≤ -20°C aufweist und eine zweite, von der Trägerschicht abgewandte Polymerschicht einen Speichermodul gemäss dem Torsionsschwingungsversuch nach DIN 53445 von ≥ 1 MPa bei ≥ 90°C, bevorzugt ≥ 110°C und besonders bevorzugt ≥ 120°C aufweist;
      durch Direktbeschichtung der Trägerschicht, insbesondere durch Extrusion des Polymerfilms auf die Trägerschicht; oder durch nachträgliches Inkontaktbringen von Trägerschicht und Polymerfilm und einen insbesondere thermischen Energieeintrag E₁;
   oder
a2) Bereitstellung eines solchen Verbundschichtmaterials;
   Das Verbundmaterial kann hierbei entweder fertigungssynchron ("just in time") beim Luftsackhersteller aus Polymerfolie und Trägerschicht oder auch bereits beim Hersteller des Polymerfilms zusammengefügt werden. Jedenfalls ist es durch eine auf die jeweilige Verwendung des Luftsacks abgestimmte Auswahl von Trägerschicht und/oder des Polymerfilms einfach möglich, Verbundschichtmaterialien mit verschiedenen Standzeiten (Dauer der ausreichenden Dichtheit im aufgeblasenen Zustand) bereitzustellen.
   Das Verfahren umfasst weiter den Schritt
b) Zusammenfügen des Verbundschichtmaterials, ggf. nach Konfektionierung zu geeignet dimensionierten Wandungsteilen, in Verbindungsbereichen, vorzugsweise nur in Randbereichen, durch einen insbesondere nicht-thermischen Energieeintrag E₂, derart, dass die zweiten Polymerschichten der Verbundschichtmaterialien entweder direkt miteinander verbunden werden oder über einen Zwischenabschnitt indirekt miteinander verbunden werden.

Zum Zweck des insbesondere thermischen Energieeintrags E₁ und des insbesondere nicht-thermischen Energieeintrags E₂ kommen insbesondere in Betracht: Ultraschall, Infrarot- oder Hochfrequenz-Strahlung, vorzugsweise Hochfrequenz-Strahlung.

Wie vorstehend bereits beschrieben wird in besonders bevorzugten Ausführungsformen ein wenigstens zweischichtiger Polymerfilm oder ein Verbundmaterial mit einem solchen Polymerfilm bereitgestellt, bei welchem durch den insbesondere thermischen Energieeintrag E₁ die erste(n) Polymerschicht(en), jedoch im Wesentlichen nicht die zweite(n) Polymerschicht(en) aufschmelzbar ist/sind, und bei welchem durch den Energieeintrag E₂ die zweite(n) Polymerschicht(en) aufschmelzbar ist/sind.

Ein weiterer Aspekt der Erfindung betrifft somit ein Verbundschichtmaterial zur Herstellung eines Luftsacks. Das Verbundschichtmaterial umfasst einen Polymerfilm wie vorstehend beschrieben, welcher Polymerfilm mit einer seiner Polymerschichten, insbesondere mit seiner ersten Polymerschicht, auf eine Trägerschicht, vorzugsweise aus einem gasdurchlässigen textilen Flächengebilde, laminiert ist.

Ein weiterer Aspekt der Erfindung betrifft einen wenigstens zweischichtigen, insbesondere co-extrudierten Polymerfilm, wobei eine erste Polymerschicht eine Glasübergangstemperatur T_{g1} von ≤ 10° C, bevorzugt ≤ 0° C, besonders bevorzugt ≤ -20° C aufweist und eine zweite Polymerschicht eine zweite Polymerschicht einen Speichermodul gemäss dem Torsionsschwingungsversuch nach DIN 53445 von ≥ 1 MPa bei ≥ 90°C, bevorzugt ≥ 110°C und besonders bevorzugt ≥ 120°C aufweist.

In einer Ausführungsform ist der Polymerfilm derart, dass durch einen ersten Energieeintrag die erste Polymerschicht, jedoch im Wesentlichen nicht die zweite(n) Polymerschicht(en) aufschmelzbar ist, und wobei durch einen zweiten Energieeintrag die zweite Polymerschicht, jedoch im Wesentlichen nicht die erste Polymerschicht aufschmelzbar ist.

Ein weiterer Aspekt der Erfindung betrifft ein passives Rückhaltesystem insbesondere für ein Kraftfahrzeug, umfassende wenigstens einen Luftsack wie vorstehend beschrieben.

Die Erfindung wird nachfolgend zum besseren Verständnis anhand von Ausführungsbeispielen und Figuren näher erläutert, ohne den Gegenstand der Erfindung auf die gezeigten Ausführungsformen zu beschränken. Es zeigen:
- Fig. 1:: Herstellung eines Verbundschichtmaterials;
- Fig. 2:: a) Wandungsteile eines Luftsacks, separat;
b) Wandungsteile eines Luftsacks, verbunden;
- Fig. 3:: Verbundene Wandungsteile mit zusätzlicher Naht;
- Fig. 4:: a) Wandungsteile eines Luftsacks, separat;
b) Wandungsteile eines Luftsacks, verbunden
- Fig. 5:: a) Wandungsteile eines Luftsacks mit flachem Zwischenabschnitt, separat;
b) Wandungsteile eines Luftsacks mit flachem Zwischenabschnitt, verbunden;
- Fig. 6:: a) Wandungsteile eines Luftsacks mit gebogen einzusetzendem Zwischenabschnitt, separat;
b) Wandungsteile eines Luftsacks mit gebogen eingesetztem Zwischenabschnitt.

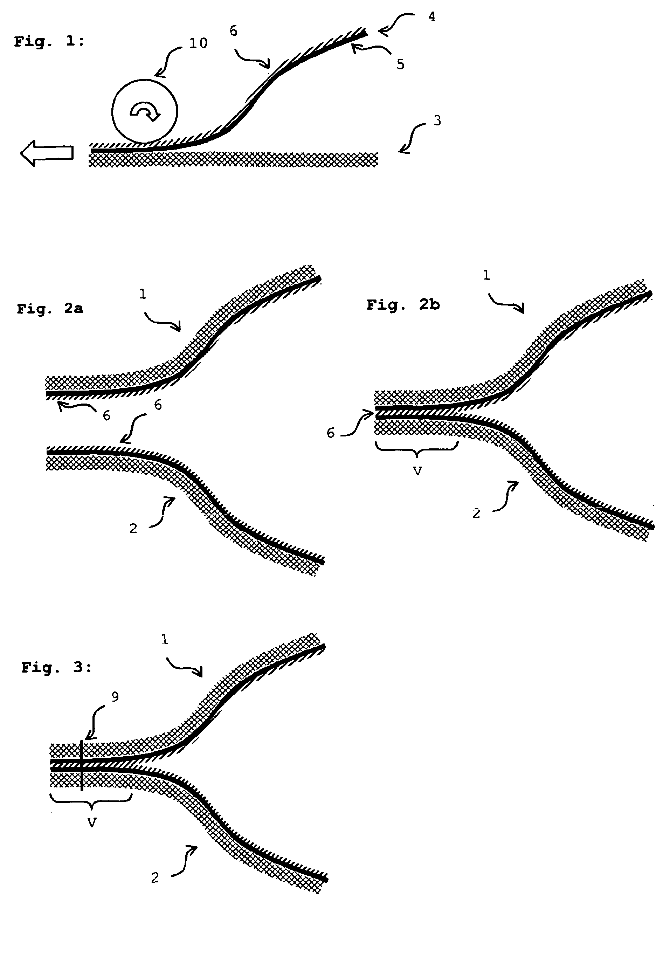

Fig. 1 zeigt schematisch die Herstellung eines Verbundschichtmaterials. Hierzu wird ein Polymerfilm 4 mit seiner ersten Polymerschicht 5 auf eine Trägerschicht 3 laminiert. Der Laminierungsschritt erfolgt bevorzugt unter Einwirkung eines ersten Energieeintrags E₁, insbesondere von thermischer Energie und unter Anpressen mit einer Andruckwalze 10. Die Polymerschicht 5 wird hierbei angeschmolzen und verbindet sich beim Wiedererstarren mit der Trägerschicht 3. Die Transportrichtung der Materialien ist mit einem Pfeil angedeutet. Anwendbare Laminiertechniken sind dem Fachmann hinlänglich bekannt.

Fig. 2 zeigt schematisch die Herstellung eines Luftsacks aus zwei Wandungsteilen 1,2. Gezeigt ist jeweils nur ein Ausschnitt in einem Verbindungsbereich V. Die gemäss Fig. 1 hergestellten Verbundschichtmaterialien werden geeignet konfektioniert und als Wandungsteile 1,2 eingesetzt. In Fig. 2a sind die Wandungsteile 1,2 unverbunden dargestellt, jedoch bereits räumlich vorarrangiert, und zwar derart, dass die zweiten Polymerschichten 6 zueinander weisen. In Fig. 2b sind die Wandungsteile 1,2 verbunden dargestellt, wobei in einem Verbindungsbereich V die zweiten Polymerschichten 6 unter Einwirkung eines zweiten Energieeintrags E₂ miteinander verbunden sind. Durch geeignete Auswahl der Energieeinträge E₁ und E₂ kann gewährleistet werden, dass beim Verbinden der zweiten Polymerschichten 6 nicht die Laminierung von Trägerschicht 3 und erster Polymerschicht 5 wieder in Mitleidenschaft gezogen wird (sog. orthogonale Sensitivität).

Fig. 3 zeigt die Ausführungsform gemäss Fig. 2b, jedoch mit einer Naht 9 im Verbindungsbereich V, welche ggf. zusätzliche Stabilität verleihen kann. Eine derartige Naht 9 (oder auch mehrere Nähte) können ergänzend vorgesehen werden, müssen sich jedoch in einem geeignet dimensionierten Verbindungsbereich V befinden, so dass die Dichtheit der fusionierten Polymerschichten 6 nicht beeinträchtigt ist.

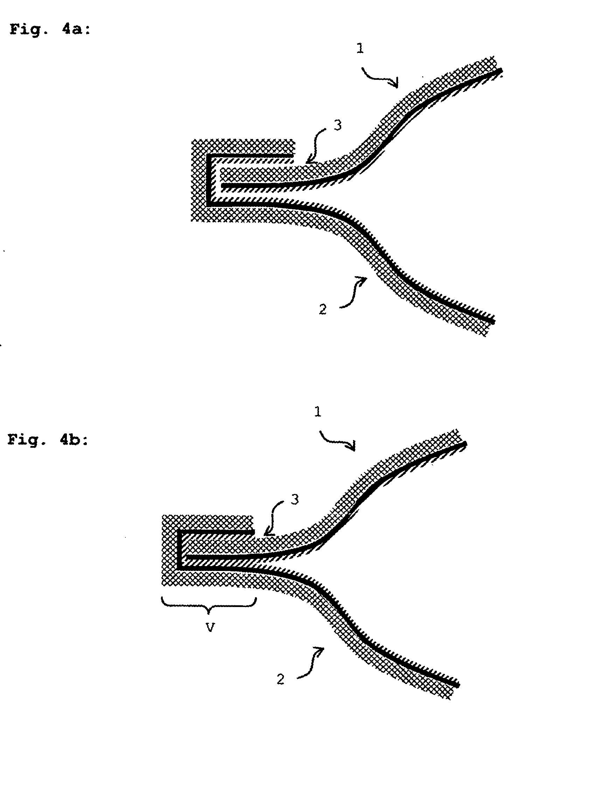

Fig. 4 zeigt eine weitere Ausführungsform der Erfindung, bei welcher die Überlappung der Wandungsteile 1,2 im Verbindungsbereich V anders bewirkt ist. Hierbei ist das Wandungsteil 2 um einen Randbereich des Wandungsteils 1 herumgezogen, so dass es - zusätzlich zu der Verbindung der zweiten Polymerschichten 6 wie auch in Fig. 2b gezeigt - mit seiner zweiten Polymerschicht auf der Oberseite des Wandungsteils 1 zu liegen kommt und dort eine zusätzliche Laminierung erfolgen kann (vergl. Fig. 4b). Diese Ausführungsform zeichnet sich durch besonders grosse Stabilität aus.

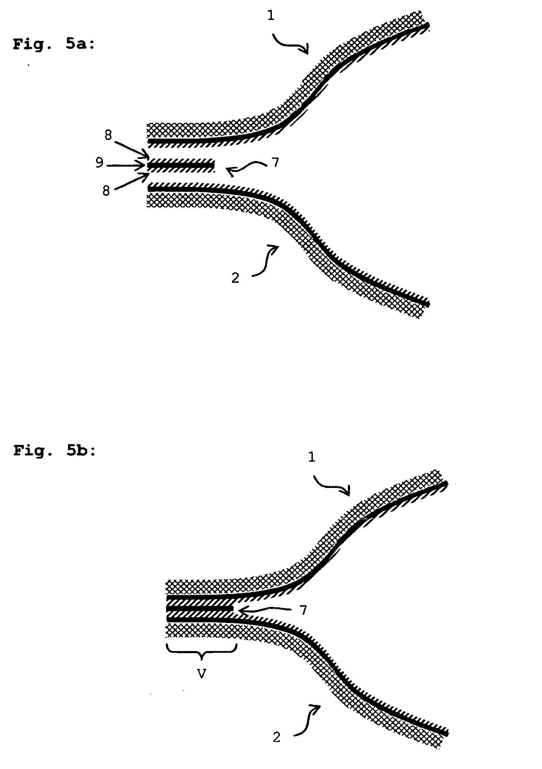

In Fig. 5 ist eine Ausführungsform gezeigt, bei welcher die Verbindung der Wandungsteile 1,2 über einen Zwischenabschnitt 7 bewirkt wird. In Fig. 5a ist dieser noch separat gezeigt: Der Zwischenabschnitt verfügt auf seinen den zweiten Polymerschichten 6 der Wandungsteile 1,2 zugewandten Seiten über ein Material 8, welches identisch oder chemisch kompatibel mit dem Material der zweiten Polymerschichten 6 ist; insbesondere soll eine Fusionierung des Materials 8 mit den zweiten Polymerschichten 6 ermöglicht sein unter einem Energieeintrag E₂, mit welchem auch die Polymerschichten 6 miteinander verbunden werden könnten. Der Zwischenabschnitt 7 verfügt über eine innere Lage 9, bspw. aus einem Material wie es auch als Trägerschicht 3 für die Wandungsteile 1,2 verwendet werden kann (s. o.). Fig. 5b zeigt exemplarisch eine solchermassen bewirkte Verbindung der Wandungsteile 1,2.

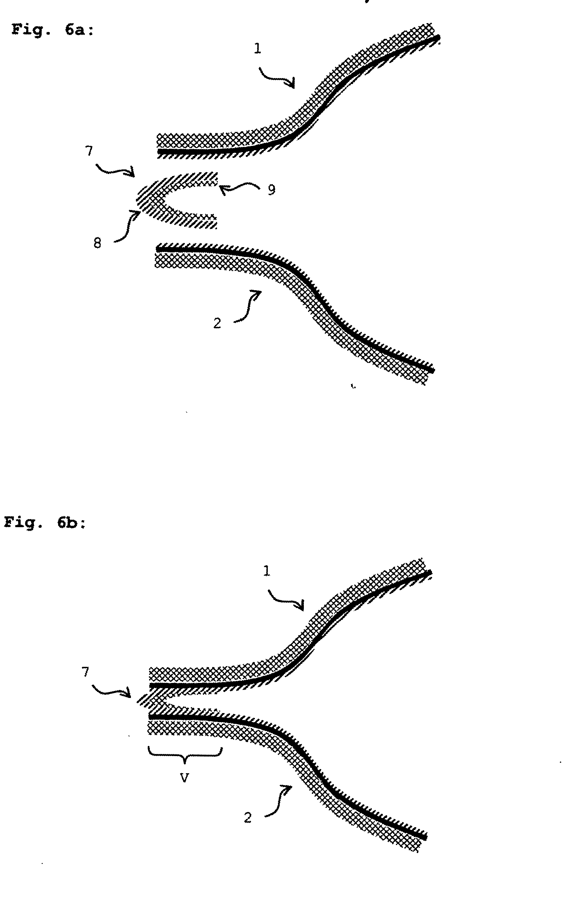

In Fig. 6 ist eine weitere Ausführungsform mit einer weiteren Variante eines Zwischenstücks. Das in Fig. 6 gezeigte Zwischenstück 7 ist in einen Zwischenbereich zwischen den Wandungsteilen 1,2 hineingefaltet, so dass das Material 8 zu den zweiten Polymerschichten 6 der Wandungsteile 1,2 weist. Der Zwischenabschnitt 7 verfügt über eine Unterlage 9, welche wie die innere Lage 9 in Fig. 5a aus einem Material bestehen kann, wie es auch als Trägerschicht für die Wandungsteile 1,2 verwendet werden kann (s. o.). Durch die Ausgestaltung des Zwischenstücks gemäss Fig. 6 kann aufgrund der Faltung des Zwischenstücks 7 auf eine separate Beschichtung zweier gegenüberliegender Seiten des Zwischenstücks 7 verzichtet werden.

## Patentansprüche

1. Wenigstens zweischichtiger, insbesondere co-extrudierter Polymerfilm (4), wobei eine erste Polymerschicht (5) eine Glasübergangstemperatur T_{g1} von ≤ 10° C aufweist und eine zweite Polymerschicht (6) einen Speichermodul gemäss dem Torsionsschwingungsversuch nach DIN 53445 (August 1986) von ≥ 1 MPa bei ≥ 90°C aufweist.

2. Polymerfilm gemäss Anspruch 1, wobei durch einen ersten Energieeintrag E₁ die erste Polymerschicht (5), jedoch im Wesentlichen nicht die zweite(n) Polymerschicht(en) (6) aufschmelzbar ist, und wobei durch einen zweiten Energieeintrat E₂ die zweite Polymerschicht (6), jedoch im Wesentlichen nicht die erste Polymerschicht (5) aufschmelzbar ist.

3. Luftsack mit wenigstens einem Wandungsteil (1,2), welches wenigstens eine Wandungsteil (1,2) ein Verbundschichtmaterial umfasst oder daraus besteht, wobei das Verbundschichtmaterial umfasst:
- eine Trägerschicht (3), insbesondere bestehend aus einem gasdurchlässigen textilen Flächengebilde, vorzugsweise einer Gewebe- oder Gewirkelage,
- einen insbesondere co-extrudierten Polymerfilm (4) gemäss einem der Ansprüche 1 und 2, wobei der Polymerfilm (4) zweischichtig ist und die erste Polymerschicht (5) der Trägerschicht (3) zugewandt ist und die zweite Polymerschicht (6) von der Trägerschicht (3) abgewandte ist
wobei das wenigstens eine Wandungsteil (1,2) in wenigstens einem Verbindungsbereich (V) derart zusammengefügt ist, dass die zweiten Polymerschichten (6) des wenigstens einen Wandungsteile (1,2) entweder direkt miteinander verbunden sind oder über einen Zwischenabschnitt (7) indirekt miteinander verbunden sind.

4. Luftsack gemäss Anspruch 3, **dadurch gekennzeichnet, dass** das wenigstens eine Wandungsteil (1,2) des Luftsacks derart angeordnet ist, dass sich im Betriebszustand des Luftsacks ein textiles Flächengebilde auf der Aussenseite des Verbundschichtmaterials befindet.

5. Luftsack gemäss einem der Ansprüche 3 oder 4, **dadurch gekennzeichnet, dass** die Glasübergangstemperatur T_{g1} ≤ -30°C ist.

6. Luftsack gemäss einem der Ansprüche 3 bis 5, **dadurch gekennzeichnet, dass**
- der wenigstens zweischichtige Polymerfilm (4) auf die Trägerschicht (3) laminiert ist und/oder
- die Verbindung der zweiten Polymerschichten (6) verschiedener Wandungsteile (1,2) durch einen Energieeintrag E₂ bewirkt ist.

7. Luftsack gemäss Anspruch 6, **dadurch gekennzeichnet, dass** die Trägerschichten (3) und Polymerschichten (5,6) derart beschaffen sind, dass durch einen Energieeintrag E₁ die erste(n) Polymerschicht(en) (5), jedoch im Wesentlichen nicht die zweite(n) Polymerschicht(en) (6) aufschmelzbar ist/sind, und dass durch den Energieeintrag E₂ die zweite(n) Polymerschicht(en) (6), jedoch im Wesentlichen nicht die erste(n) Polymerschicht(en) (5) aufschmelzbar ist/sind.

8. Luftsack gemäss einem der Ansprüche 3 bis 7, **dadurch gekennzeichnet, dass** die erste, der Trägerschicht zugewandte Polymerschicht (5) eine Erweichungstemperatur Tₑ₁ aufweist und die zweite, von der Trägerschicht abgewandte Polymerschicht (6) eine Erweichungstemperatur Tₑ₂ > Tₑ₁ aufweist, gemäss DIN 53445 bei einem Speichermodul von > 1 MPa.

9. Luftsack gemäss einem der Ansprüche 3 bis 8, wobei die zweiten Polymerschichten (6) des wenigstens einen Wandungsteiles (1,2) über einen Zwischenabschnitt (7) indirekt miteinander verbunden sind, welcher Zwischenabschnitt (7) auf seinen den zweiten Polymerschichten (6) zugewandten Seiten zumindest teilweise ein Material (8) umfasst, welches identisch oder chemisch kompatibel mit dem Material der zweiten Polymerschicht(en) (6) ist.

10. Luftsack gemäss einem der Ansprüche 3 bis 9, **dadurch gekennzeichnet, dass** das wenigstens eine Wandungsteil (1,2) in Verbindungsbereichen (V) zusätzlich durch mechanische Mittel verbunden ist, insbesondere durch eine oder mehrere Nähte (9).

11. Verfahren zur Herstellung eines Luftsacks insbesondere gemäss einem der Ansprüche 3 bis 10, umfassend die Schritte:
a1) Herstellung eines Verbundschichtmaterials umfassend
- eine Trägerschicht (3), insbesondere bestehend aus einem insbesondere gasdurchlässigen textilen Flächengebilde, vorzugsweise einer Gewebe- oder Gewirkelage; und
- einen zweischichtigen Polymerfilm (4), wobei eine erste, der Trägerschicht zuzuwendende Polymerschicht (5) eine Glasübergangstemperatur T_{g1} von ≤ 10°C aufweist und eine zweite, von der Trägerschicht abgewandte Polymerschicht (6) einen Speichermodul gemäss dem Torsionsschwingungsversuch nach DIN 53445 von ≥ 1 MPa bei ≥ 90°C aufweist,
durch Direktbeschichtung der Trägerschicht ; oder durch nachträgliches Inkontaktbringen von Trägerschicht und Polymerfilm und einen Energieeintrag E₁;
a2) oder Bereitstellung eines solchen Verbundschichtmaterials;
b) Zusammenfügen des Verbundschichtmaterials in Verbindungsbereichen (V) durch einen Energieeintrag E₂, derart, dass die zweiten Polymerschichten (6) der Verbundschichtmaterialien entweder direkt miteinander verbunden werden oder über einen Zwischenabschnitt (7) indirekt miteinander verbunden werden.

12. Verfahren gemäss Anspruch 11, **dadurch gekennzeichnet, dass** ein wenigstens zweischichtiger Polymerfilm (4) oder ein Verbundmaterial mit einem solchen Polymerfilm (4) bereitgestellt wird, bei welchem durch den Energieeintrag E₁ die erste(n) Polymerschicht(en) (5), jedoch im Wesentlichen nicht die zweite(n) Polymerschicht(en) (6) aufschmelzbar ist/sind, und dass durch den Energieeintrag E₂ die zweite(n) Polymerschicht(en) (6), jedoch im Wesentlichen nicht die erste(n) Polymerschicht(en) (5) aufschmelzbar ist/sind.

13. Verfahren gemäss einem der Ansprüche 11 oder 12, **dadurch gekennzeichnet, dass** in dem Verbindungsbereich (V) zumindest teilweise ein zusätzliches mechanisches Verbindungsmittel angebracht wird.

14. Verbundschichtmaterial zur Herstellung eines Luftsacks gemäss einem der Ansprüche 3 bis 10, umfassend einen Polymerfilm (4) gemäss einem der Ansprüche 1 oder 2, welcher Polymerfilm (4) mit einer seiner Polymerschichten, insbesondere mit seiner ersten Polymerschicht (5), auf eine Trägerschicht (3), vorzugsweise aus einem gasdurchlässigen textilen Flächengebilde, laminiert ist.

15. Passives Rückhaltesystem insbesondere für ein Kraftfahrzeug, umfassende wenigstens einen Luftsack gemäss einem der Ansprüche 3 bis 10.

## Claims

1. At least two-layered, in particular co-extruded polymer film (4), a first polymer layer (5) having a glass transition temperature Tg₁ of less than 10 °C and a second polymer layer (6) having a storage modulus according to the torsion pendulum test as specified by DIN 53 445 (August 1986) of ≥ 1 MPa at ≥ 90°C.

2. Polymer film according to claim 1, wherein the first polymer layer (5), but not essentially the second polymer layer (6), can be melted by the introduction of energy E₁, and wherein the second polymer layer (6), but not essentially the first polymer layer (5), can be melted by a second introduction of energy E₂.

3. Airbag with at least one wall part (1, 2), which wall part (1, 2) comprises or consists of a laminated material, the laminated material comprising:
- a backing layer (3), in particular comprising a gas-permeable textile sheet-like structure, preferably a layer of woven or knitted fabric,
- a polymer film (4) according to one of claims 1 and 2, in particular a co-extruded polymer film (4) according to one of claims 1 and 2, wherein the polymer film is two-layered and the first polymer layer (5) faces towards the backing layer and the second polymer layer (6) faces away from the backing layer,
the at least one wall part (1, 2) being joined together in at least one joining region (V), in such a way that the second polymer layers (6) of the at least one wall part (1, 2) are either joined to one another directly or joined to one another indirectly by way of an intermediate portion (7).

4. Airbag according to claim 3, **characterized** and that the at least one wall part (1, 2) of the airbag is arranged in such a way that, in the operating state of the airbag, a textile sheet-like formation is arranged on the outside of the laminated material.

5. Airbag according to either of claims 3 and 4, **characterized in that** the glass transition temperature T_{g2} is ≤ -30°C.

6. Airbag according to one of claims 3 to 5, **characterized in that**
- the at least two-layered polymer film (4) is laminated onto the backing layer (3); and/or
- the joining of the second polymer layers (6) of various wall parts (1, 2) is brought about by an introduction of energy E2.

7. Airbag according to claim 6, **characterized in that** the backing layers (3) and polymer layers (5, 6) are of such a nature that the first polymer layer(s) (5), but not essentially the second polymer layer(s) (6), can be melted by the introduction of energy E₁, and **in that** the second polymer layer(s) (6), but not essentially the first polymer layer(s) (5), can be melted by the introduction of energy E₂.

8. Airbag according to one of claims 3 to 7, **characterized in that** the first polymer layer (5), facing towards the backing layer, has a softening temperature Tₑ₁ and the second polymer layer (6), facing away from the backing layer, has a softening temperature Tₑ₂ > Tₑ₁, according to DIN 53 445 with a storage modulus of > 1 MPa.

9. Airbag according to one of claims 3 to 8, the second polymer layers (6) of the at least one wall part (1, 2) being joined to one another indirectly by way of an intermediate portion (7), which intermediate portion (7) comprises on its sides facing towards the second polymer layers (6) at least partially a material (8) which is identical to or chemically compatible with the material of the second polymer layer(s) (6).

10. Airbag according to one of claims 3 to 9, **characterized in that** the at least one wall part(s) (1, 2) is additionally joined in joining regions (V) by mechanical means, in particular by one or more seams (9).

11. Method for producing an airbag, in particular according to one of claims 3 to 10, comprising the steps of:
a1) producing a laminated material comprising:
- a backing layer (3), in particular comprising a textile sheet-like structure, in particular a gas-permeable textile sheet-like structure, preferably a layer of woven or knitted fabric,
- a two-layered polymer film (4), a first polymer layer (5), facing towards the backing layer, having a glass transition temperature Tg₁ of ≤ 10°C and a second polymer layer (6), facing away from the backing layer, having a storage modulus according to the torsion pendulum test as specified by DIN 53 445 of ≥ 1 MPa at ≥ 90°C;
by directly coating the backing layer; or by subsequently bringing the backing layer and the polymer film into contact and introducing energy E₁;
a2) or providing such a laminated material;
b) joining together the laminated material in joining regions (V) by introducing energy E₂ in such a way that the second polymer layers (6) of the laminated materials are either joined to one another directly or joined to one another indirectly by way of an intermediate portion (7).

12. Method according to claim 11, **characterized in that** an at least two-layered polymer film (4) or a laminated material with such a polymer film (4) is provided, in the case of which the first polymer layer(s) (5), but not essentially the second polymer layer(s) (6), can be melted by the introduction of energy E₁, and **in that** the second polymer layer(s) (6), but not essentially the first polymer layer(s) (5), can be melted by the introduction of energy E₂.

13. Method according to either of claims 11 and 12, **characterized in that** an additional mechanical joining means is at least partially provided in the joining region (V).

14. Laminated material for producing an airbag according to one of claims 3 to 10, comprising a polymer film (4) according to either of claims 1 and 2, which polymer film (4) is laminated with one of its polymer layers, in particular with its first polymer layer (5), onto a backing layer (3), preferably of a gas-permeable textile sheet-like formation.

15. Passive restraint system, in particular for a motor vehicle, comprising at least one airbag according to one of claims 3 to 10.

## Revendications

1. Film polymère (4) au moins bicouche, notamment co-extrudé, dans lequel une première couche polymère (5) présente une température de transition vitreuse T_{g1} ≤ 10 °C et une seconde couche polymère (6) présente un module de conservation selon l'essai d'oscillation de torsion selon DIN 53445 (août 1986) ≥ 1 MPa à ≥ 90 °C.

2. Film polymère selon la revendication 1, dans lequel la première couche polymère (5), mais toutefois essentiellement pas la ou les secondes couches polymères (6), est fusible par un premier apport d'énergie E₁, et dans lequel la seconde couche polymère (6), mais toutefois essentiellement pas la première couche polymère (5) est fusible par un second apport d'énergie E₂.

3. Coussin gonflable comprenant au moins une partie de paroi (1, 2), ladite ou lesdites parties de paroi (1, 2) comprenant un matériau stratifié composite ou en étant constituées, le matériau stratifié composite comprenant :
- une couche support (3), notamment constituée par une structure plate textile perméable aux gaz, de préférence une couche de tissu ou de tricot,
- un film polymère (4) notamment co-extrudé selon l'une quelconque des revendications 1 et 2, le film polymère (4) étant bicouche et la première couche polymère (5) étant tournée vers la couche support (3) et la seconde couche polymère (6) étant détournée de la couche support (3),
dans lequel la ou les parties de paroi (1, 2) sont assemblées dans au moins une zone de liaison (V) de manière à ce que les secondes couches polymères (6) de la ou des parties de paroi (1, 2) soient reliées directement les unes avec les autres ou reliées indirectement les unes avec les autres par une section intermédiaire (7).

4. Coussin gonflable selon la revendication 3, **caractérisé en ce que** la ou les parties de paroi (1, 2) du coussin gonflable sont agencées de manière à ce qu'une structure plate textile se trouve sur le côté extérieur du matériau stratifié composite à l'état d'utilisation du coussin gonflable.

5. Coussin gonflable selon l'une quelconque des revendications 3 ou 4, **caractérisé en ce que** la température de transition vitreuse T_{g1} est ≤ -30 °C.

6. Coussin gonflable selon l'une quelconque des revendications 3 à 5, **caractérisé en ce que**
- le film polymère au moins bicouche (4) est stratifié sur la couche support (3) et/ou
- la liaison des secondes couches polymères (6) de différentes parties de paroi (1, 2) est produite par un apport d'énergie E₂.

7. Coussin gonflable selon la revendication 6, **caractérisé en ce que** les couches supports (3) et les couches polymères (5, 6) sont conçues de manière à ce que la ou les premières couches polymères (5), mais toutefois essentiellement pas la ou les secondes couches polymères (6), soient fusibles par un apport d'énergie E₁, et **en ce que** la ou les secondes couches polymères (6), mais toutefois essentiellement pas la ou les premières couches polymères (5), soient fusibles par l'apport d'énergie E₂.

8. Coussin gonflable selon l'une quelconque des revendications 3 à 7, **caractérisé en ce que** la première couche polymère (5) qui est tournée vers la couche support présente une température de ramollissement Tₑ₁ et la seconde couche polymère (6) qui est détournée de la couche support présente une température de ramollissement Tₑ₂ > Tₑ₁, selon DIN 53445 avec un module de conservation > 1 MPa.

9. Coussin gonflable selon l'une quelconque des revendications 3 à 8, dans lequel les secondes couches polymères (6) de la ou des parties de paroi (1, 2) sont reliées indirectement les unes avec les autres par une section intermédiaire (7), ladite section intermédiaire (7) comprenant sur ses côtés tournés vers les secondes couches polymères (6) au moins en partie un matériau (8) qui est identique ou chimiquement compatible avec le matériau de la ou des secondes couches polymères (6).

10. Coussin gonflable selon l'une quelconque des revendications 3 à 9, **caractérisé en ce que** la ou les parties de paroi (1, 2) sont aditionnellement reliées dans des zones de liaison (V) par des moyens mécaniques, notamment par une ou plusieurs coutures (9).

11. Procédé de fabrication d'un coussin gonflable notamment selon l'une quelconque des revendications 3 à 10, comprenant les étapes suivantes :
a1) fabrication d'un matériau stratifié composite, comprenant
- une couche support (3), notamment constituée par une structure plate textile notamment perméable aux gaz, de préférence une couche de tissu ou de tricot ; et
- un film polymère bicouche (4), une première couche polymère (5) tournée vers la couche support présentant une température de transition vitreuse T_{g1} ≤ 10 °C, et une seconde couche polymère (6) détournée de la couche support présentant un module de conservation selon l'essai d'oscillation de torsion selon DIN 53445 de ≥ 1 MPa à ≥ 90 °C,
par revêtement direct de la couche support ; ou par mise en contact ultérieure de la couche support et du film polymère et d'un apport d'énergie E₁ ;
a2) ou la mise à disposition d'un tel matériau stratifié composite ;
b) l'assemblage du matériau stratifié composite dans des zones de liaison (V) par un apport d'énergie E₂ de manière à ce que les secondes couches polymères (6) du matériau stratifié composite soient reliées directement les unes avec les autres ou reliées indirectement les unes avec les autres par une section intermédiaire (7).

12. Procédé selon la revendication 11, **caractérisé en ce qu'**un film polymère au moins bicouche (4) ou un matériau composite contenant un tel film polymère (4) est mis à disposition, pour lequel la ou les premières couches polymères (5), mais toutefois essentiellement pas la ou les secondes couches polymères (6), sont fusibles par l'apport d'énergie E₁, et la ou les secondes couches polymères (6), mais toutefois essentiellement pas la ou les premières couches polymères (5), sont fusibles par l'apport d'énergie E₂.

13. Procédé selon l'une quelconque des revendications 11 ou 12, **caractérisé en ce qu'**un moyen de liaison mécanique supplémentaire est appliqué au moins en partie dans la zone de liaison (V).

14. Matériau stratifié composite pour la fabrication d'un coussin gonflable selon l'une quelconque des revendications 3 à 10, comprenant un film polymère (4) selon l'une quelconque des revendications 1 ou 2, ledit film polymère (4) étant stratifié avec une de ses couches polymères, notamment avec sa première couche polymère (5), sur une couche support (3), de préférence en une structure plate textile perméable aux gaz.

15. Système de retenue passif, notamment pour un véhicule automobile, comprenant au moins un coussin gonflable selon l'une quelconque des revendications 3 à 10.
